(19) Europäisches Patentamt / European Patent Office / Office européen des brevets

(11) **EP 2 870 216 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(51) Int Cl.:
*C09K 8/58* (2006.01)  *C11C 3/10* (2006.01)
*E21B 43/16* (2006.01)

(21) Anmeldenummer: **13732557.7**

(22) Anmeldetag: **01.07.2013**

(86) Internationale Anmeldenummer:
**PCT/EP2013/063828**

(87) Internationale Veröffentlichungsnummer:
**WO 2014/005993 (09.01.2014 Gazette 2014/02)**

(54) **VERFAHREN ZUR FÖRDERUNG VON ERDÖL AUS ERÖLLAGERSTÄTTEN MIT INHOMOGENER PERMEABILITÄT**

METHOD FOR THE RECOVERY OF PETROLEUM FROM PETROLEUM DEPOSITS HAVING HETEROGENEOUS PERMEABILITY

PROCÉDÉ D'EXTRACTION DE PÉTROLE À PARTIR DE GISEMENTS À PERMÉABILITÉ INHOMOGÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2012 EP 12174945**

(43) Veröffentlichungstag der Anmeldung:
**13.05.2015 Patentblatt 2015/20**

(73) Patentinhaber:
• **Wintershall Holding GmbH**
  **34119 Kassel (DE)**
• **Institute of Petroleum Chemistry of the Siberian Branch of the Russian Academy of Sciences**
  **Tomsk 634021 (RU)**
• **Stehle, Vladimir**
  **34123 Basel (DE)**
• **Liubov, Altunina**
  **Tomsk 634021 (RU)**
• **Kuvshinov, Vladimir**
  **Tomsk 634021 (RU)**

(72) Erfinder:
• **STEHLE, Vladimir**
  **34123 Kassel (DE)**
• **LIUBOV, Altunina**
  **Tomsk 634021 (RU)**
• **KUVSHINOV, Vladimir**
  **Tomsk 634021 (RU)**

(74) Vertreter: **BASF IP Association**
  **BASF SE**
  **ZRX-C6**
  **67056 Ludwigshafen (DE)**

(56) Entgegenhaltungen:
US-A- 3 298 436    US-A1- 2005 247 907
US-A1- 2009 143 254    US-A1- 2011 155 376

**Beschreibung**

Die vorliegende Erfindung betrifft ein Verfahren zur Förderung von Erdöl aus Erdöllagerstätten mit inhomogener Permeabilität. Durch die erfindungsgemäße Verwendung von Rohglyzerin (R) sind die rheologischen Eigenschaften der erfindungsgemäßen Formulierungen (F) in breiten Intervallen modifizierbar und lassen sich an die geotechnischen Parameter, die Umweltbedingungen und die Art des Erdöls unterschiedlicher Erdöllagerstätten anpassen.

In natürlichen Erdölvorkommen liegt Erdöl in Hohlräumen poröser Speichergesteine vor, welche zur Erdoberfläche hin von undurchlässigen Deckschichten abgeschlossen sind. Neben Erdöl, inklusive Anteilen von Erdgas, enthält eine Lagerstätte weiterhin mehr oder weniger stark salzhaltiges Wasser. Bei den Hohlräumen kann es sich um sehr feine Hohlräume, Kapillaren, Poren oder dergleichen handeln, beispielsweise um solche mit einem Durchmesser von nur ca. 1 $\mu$m; die Formation kann daneben aber auch Bereiche mit Poren größeren Durchmessers und/oder natürliche Brüche aufweisen. In einem Erdölvorkommen können eine oder mehrere ölführende Schichten vorhanden sein.

Nach dem Niederbringen der Bohrung in die ölführenden Schichten fließt das Öl zunächst aufgrund des natürlichen Lagerstättendrucks zu den Förderbohrungen und gelangt eruptiv an die Erdoberfläche. Diese Phase der Erdölförderung wird vom Fachmann Primärförderung genannt. Bei schlechten Lagerstättenbedingungen, wie beispielsweise einer hohen Ölviskosität, schnell abfallendem Lagerstättendruck oder großen Fließwiderständen in den ölführenden Schichten, kommt die Eruptivförderung schnell zum Erliegen. Mit der Primärförderung können im Durchschnitt nur 2 bis 10 % des ursprünglich in der Lagerstätte vorhandenen Öles gefördert werden.

Bei der Erdölförderung unterscheidet man zwischen der primären, sekundären und tertiären Förderung.

Um die Ausbeute zu steigern, werden daher die so genannten sekundären Förderverfahren eingesetzt. Das gebräuchlichste Verfahren der sekundären Erdölförderung ist das Wasserfluten. Dabei wird durch so genannte Injektionsbohrungen Wasser in die ölführenden Schichten eingepresst. Hierdurch wird der Lagerstättendruck künstlich erhöht und das Öl von den Injektionsbohrungen aus zu den Produktionsbohrungen gedrückt. Durch Wasserfluten kann der Ausbeutungsgrad unter bestimmten Bedingungen wesentlich gesteigert werden.

Darüber hinaus ist es möglich, die Erdölausbeute durch Maßnahmen der tertiären Ölförderung weiter zu steigern. Bei der tertiären Erdölförderung werden geeignete Chemikalien als Hilfsmittel zur Ölförderung einsetzt. Hierzu gehört das so genannte "Polymerfluten". Beim Polymerfluten presst man durch die Injektionsbohrungen anstelle von Wasser eine wässrige Lösung eines verdickend wirkenden Polymers in die Erdöllagerstätte ein. Diese wässrigen Lösungen werden auch als Flutmittel für die tertiäre Erdölförderung bezeichnet. Durch das Einpressen der Polymerlösung wird das Erdöl durch die besagten Hohlräume in der Formation von der Injektionsbohrung ausgehend in Richtung der Produktionsbohrung gedrückt, und das Erdöl wird schließlich über die Produktionsbohrung gefördert. Aufgrund der erhöhten Viskosität der Polymerlösung, welche an die Viskosität des Erdöls angepasst wird, kann die Polymerlösung nicht mehr oder zumindest nicht so leicht durch Hohlräume durchbrechen wie dies bei reinem Wasser der Fall ist. Dem Wasser nicht zugängliche Teile der Lagerstätte werden durch die Polymerlösung erreicht.

Als Flutmittel zur tertiären Erdölförderung sind wässrige Lösungen einer Vielzahl verschiedener, verdickend wirkender wasserlöslicher Polymere vorgeschlagen worden, und zwar sowohl synthetische Polymere, wie beispielsweise Polyacrylamid oder Copolymere aus Acrylamid und anderen Monomeren, insbesondere Sulfonsäuregruppen aufweisende Monomere sowie Polymere natürlichen Ursprungs wie beispielsweise Glucosylglucane, Xanthane oder Diutane.

Die vorstehend beschriebenen Polymere sind jedoch kostenintensiv, so dass deren Verwendung als Bestandteil eines Flutmittels in tertiären Förderverfahren zu einer signifikanten Verteuerung des geförderten Erdöls führt.

Beim Wasserfluten soll im Idealfalle eine von der Injektionsbohrung ausgehende Wasserfront das Öl gleichmäßig über die gesamte Erdölformation zur Produktionsbohrung drücken. In der Praxis weist eine Erdölformation aber Bereiche mit unterschiedlich hohem Fließwiderstand auf. Neben feinporösen ölgesättigten Speichergesteinen mit einem hohen Fließwiderstand für Wasser existieren auch Bereiche mit niedrigem Fließwiderstand für Wasser, wie beispielsweise natürliche oder künstliche Brüche oder sehr permeable Bereiche im Speichergestein. Bei derartigen permeablen Bereichen kann es sich auch um bereits entölte Bereiche handeln. Beim Wasserfluten fließt das eingepresste Flutwasser naturgemäß hauptsächlich durch Fließwege mit niedrigem Fließwiderstand von der Injektionsbohrung zur Produktionsbohrung. Dies hat zur Folge, dass die feinporösen ölgesättigten Lagerstättenbereiche mit hohem Fließwiderstand nicht mehr geflutet werden, und dass über die Produktionsbohrung zunehmend mehr Wasser und weniger Erdöl gefördert wird. Der Fachmann spricht in diesem Zusammenhang von einer "Verwässerung der Produktion". Die genannten Effekte sind bei viskosen Erdölen besonders ausgeprägt.

Zur Förderung von Erdöl aus Lagerstätten mit hoher Erdölviskosität kann das Erdöl auch durch Einpressen von Heißdampf in der Lagerstätte erwärmt und so die Ölviskosität verringert werden. Wie beim Wasserfluten können aber auch Heißdampf und Dampfkondensat unerwünscht schnell durch hoch permeable Zonen von den Injektionsbohrungen zu den Produktionsbohrungen durchschlagen, wodurch die Effizienz der Förderung reduziert wird.

Zurzeit ist es üblich, bei der Entwicklung von Lagerstätten mit viskosem Öl beide Schritte durchzuführen: Wasserfluten und im Anschluss daran Dampffluten.

Im Stand der Technik sind Maßnahmen bekannt, derartige hoch permeable Zonen zwischen Injektionsbohrungen und Produktionsbohrungen mittels geeigneter Maßnahmen zu schließen. Hierdurch werden hoch permeable Zonen mit geringem Fließwiderstand blockiert und das Flutwasser bzw. der Flutdampf durchströmen wieder die ölgesättigten, niedrig permeablen Schichten. Derartige Maßnahmen sind auch als so genannte "Conformance Control" bekannt. Einen Überblick über Maßnahmen zur "Conformance Control" geben Borling et al. "Pushing out the oil with Conformance Control" in Oilfield Review (1994), Seiten 44 ff.

Zur "Conformance Control" können vergleichsweise niedrig viskose Formulierungen bestimmter chemischer Stoffe eingesetzt werden, die sich leicht in die Formation einpressen lassen, und deren Viskosität erst nach dem Einpressen in die Formation unter den in der Formation herrschenden Bedingungen deutlich ansteigt. Derartige Formulierungen enthalten zur Viskositätssteigerung geeignete anorganische, organische oder polymere Komponenten. Die Viskositätssteigerung der eingepressten Formulierung kann einerseits einfach zeitverzögert auftreten. Es sind aber auch Formulierungen bekannt, bei denen die Viskositätssteigerung im Wesentlichen durch den Temperaturanstieg ausgelöst wird, wenn sich die eingepresste Formulierung in der Lagerstätte allmählich auf die Lagerstättentemperatur erwärmt. Formulierungen, deren Viskosität erst unter Formationsbedingungen ansteigt, sind beispielsweise als "Thermogele" oder "delayed gelling system" bekannt. Diese Formulierungen sind jedoch nur effizient anwendbar in Lagerstätten, deren Temperatur über 60 °C liegt.

SU 1 654 554 A1 offenbart Verfahren zur Ölgewinnung, bei dem Mischungen enthaltend Aluminiumchlorid oder Aluminiumnitrat, Harnstoff und Wasser in die Erdölformationen injiziert werden. Bei den erhöhten Temperaturen in der Formation hydrolysiert der Harnstoff zu Kohlendioxid und Ammoniak. Der entstehende Ammoniak erhöht den pH-Wert des Wassers deutlich, wodurch hochviskoses Aluminiumhydroxidgel ausfällt, das die hoch permeablen Bereiche verstopft.

RU 2 339 803 C2 beschreibt ein Verfahren zum Blockieren hoch permeabler Bereiche in Erdöllagerstätten, bei dem zunächst das Volumen des zu blockierenden, hoch permeablen Bereichs bestimmt wird. Anschließend wird eine wässrige Formulierung enthaltend Carboxymethylcellulose sowie Chromacetat als Vernetzer in den zu blockierenden Bereich injiziert, wobei das Volumen der injizierten Mischung 15 % bezogen auf das Gesamtvolumen des zu blockierenden Bereichs beträgt. Im nächsten Schritt wird eine wässrige Formulierung enthaltend Polyacrylamid und einen Vernetzer injiziert.

L. K. Altunina und V. A. Kushinov, Oil & Gas Science and Technology- Rev. IFP, Vol. 63 (2008), Seiten 37 bis 48 und Altunina L.K., Kuvshinov V.A., Stasyeva L.A. // Thermoreversible Polymer Gels for Increased Efficiency of Cyclic-Steam Well Treatment, - 2006 - 1 CD-ROM, - 68th EAGE Conference & Exhibition "Opportunities in Marine Areas", Paper D030 beschreiben verschiedene Thermogele und deren Verwendung zur Ölförderung, darunter Thermogele auf Basis von Harnstoff und Aluminiumsalz sowie Thermogele auf Basis von Celluloseether.

Die vorstehend beschriebenen gelbildenden Formulierungen stellen "Thermogele" dar, das heißt Formulierungen deren Viskosität mit Zunahme der Temperatur ansteigt. Nachteilig an diesen Thermogelen ist, dass sie nur in Erdöllagerstätten eingesetzt werden können, die Lagerstättentemperaturen von mindestens 60 °C aufweisen.

Aufgabe der vorliegenden Erfindung war daher die Bereitstellung einer Formulierung zur Förderung von Erdöl, die die vorstehend beschriebenen Nachteile des Standes der Technik nicht oder nur in vermindertem Maße aufweist. Die Formulierung soll zur Blockierung von hoch permeablen Zonen in Erdöllagerstätten geeignet sein, die Lagerstättentemperaturen aufweisen, die unterhalb von 60 °C liegen. Die Formulierung soll darüber hinaus als Flutmittel zur tertiären Erdölförderung geeignet sein. Die rheologischen und physikalischen Parameter der Formulierung soll in breiten Intervallen modifizierbar sein und eine effiziente Profilmodifikation der Flutfront erlauben.

Eine weitere Aufgabe der vorliegenden Erfindung lag in der Bereitstellung eines Verfahrens zur Förderung von Erdöl aus Erdöllagerstätten mit inhomogener Permeabilität unter Verwendung dieser Formulierungen.

Gelöst wird diese Aufgabe durch ein Verfahren zur tertiären Förderung von Erdöl aus unterirdischen Erdöllagerstätten mit einer Lagerstättentemperatur $T_L$, in welche mindestens eine Injektionsbohrung und mindestens eine Produktionsbohrung abgeteuft sind, umfassend mindestens die folgenden Verfahrensschritte:

i) Injizieren eines Flutmittels durch mindestens eine Injektionsbohrung in die Erdöllagerstätte, wobei als Flutmittel eine Formulierung (F) verwendet wird, die eine Temperatur $T_F$ aufweist, die höher als die Temperatur $T_L$ ist,

ii) Abkühlen des Flutmittels aus Schritt i) in der Erdöllagerstätte und

iii) Injizieren eines weiteren Flutmittels durch mindestens eine Injektionsbohrung in die Erdöllagerstätte und Entnahme von Erdöl durch mindestens eine Produktionsbohrung,

wobei die Formulierung (F) Rohglyzerin (R) enthält, das die folgende Zusammensetzung aufweist: 80 bis 90 Gew.-% Glyzerin, 10 bis 20 Gew.-% Wasser, 0 bis 10 Gew.-% anorganische Salze und 0 bis 1 Gew.-% organischer Verbindungen, wobei die Gew.-%-Angaben jeweils auf das Gesamtgewicht des Rohglyzerins (R) bezogen sind.

Es wurde überraschend gefunden, dass das kostengünstige und ökologisch unbedenkliche Rohglyzerin (R) zur Herstellung von Formulierungen (F) geeignet ist, die als Flutmittel für die tertiäre Erdölförderung oder als Mittel zum Blockieren hochpermeabler Zonen in Erdöllagerstätten geeignet ist.

Die rheologischen und physikalischen Eigenschaften der Formulierung (F) lassen sich leicht modifizieren und anpassen durch einfache Variation der Komponentenkonzentrationen, insbesondere der Konzentration von Rohglyzerin (R).

Hierdurch können die Formulierungen (F) auf einfache Weise an die geotechnischen Parameter und Umweltbedingungen, das heißt insbesondere an die Lagerstättentemperatur und die Viskosität des in der Lagerstätte enthaltenen Öls, angepasst werden. Die erfindungsgemäßen Formulierungen (F) sind insbesondere für den Einsatz in Erdöllagerstätten geeignet, die relativ niedrige Lagerstättentemperaturen aufweisen (kalte Erdöllagerstätten). Durch die Verwendung von Rohglyzerin (R) können die rheologischen und physikalischen Eigenschaften der Formulierung (F) in breiten Intervallen variiert werden, so dass die Formulierung (F) auch bei der Entwicklung von Erdöllagerstätten eingesetzt werden kann, die relativ hohe Lagerstättentemperaturen aufweisen (heiße Erdöllagerstätten). Ein weiterer Vorteil der erfindungsgemäßen Formulierung (F) liegt darin, dass auch die Gefriertemperatur in breiten Intervallen regelbar ist. Durch Variation der Komponentenanteile, insbesondere der Konzentration des Rohglyzerins (R) lässt sich die Gefriertemperatur wesentlich reduzieren. Hierdurch wird der Einsatz der Formulierung (F) auch bei der Entwicklung von Erdöllagerstätten in kalten Regionen der Erde, beispielsweise in Permafrostgebieten, ermöglicht. Die Dichte der Formulierung (F) kann so eingestellt werden, dass sie größer als die Dichte des in der Erdöllagerstätte vorhandenen Lagerstättenwassers und/oder Erdöls ist. Hierdurch lässt sich die Effizienz der Ölverdrängung steigern.

Im Rahmen der vorliegenden Erfindung werden unter kalten Erdöllagerstätten Lagerstätten verstanden, die Temperaturen < 60°C aufweisen. Unter heißen Erdöllagerstätten werden Lagerstätten verstanden, die eine Temperatur von mindestens 60°C aufweisen.

Die Viskosität der Formulierungen (F) nimmt mit steigender Temperatur ab und mit abnehmender Temperatur zu. D.h. die Formulierungen (F) weisen bei relativ hohen Temperaturen eine niedrige Viskosität auf, wohingegen bei Temperatursenkung die Viskosität der Formulierung (F) steigt. Die Formulierung (F) unterscheidet sich somit von den im Stand der Technik beschriebenen klassischen Thermogelen, bei denen die Viskosität bei Temperaturerhöhung steigt. Die klassischen Thermogele weisen bei niedrigen Temperaturen eine niedrige Viskosität auf, wohingegen ihre Viskosität mit Temperaturerhöhung deutlich ansteigt.

Glyzerin ist ein dreiwertiger Alkohol (IUPAC Name 1,2,3-Propan-triol) mit der Formel $CH_2(OH)-CH(OH)-CH_2(OH)$. Glyzerin wird petrochemisch aus Propen über die Zwischenprodukte Allylchlorid und Epichlorhydrin hergestellt. Unter Rohglyzerin (R) sollen im Rahmen der vorliegenden Erfindung alle Mischungen verstanden werden, die Glyzerin, Wasser, anorganische Salze und organische Verbindungen (von Glyzerin verschieden) aufweisen. Bevorzugt ist jedoch Rohglyzerin (R), das aus natürlichen Fetten oder Ölen gewonnen wird. Glyzerin ist Bestandteil aller tierischen und pflanzlichen Fette/Öle. Rohglyzerin (R) fällt in großen Mengen als Nebenprodukt der Biodieselherstellung an. Zur Erzeugung von Biodiesel werden pflanzliche Öle, wie beispielsweise Rapsöl, mit Methanol umgeestert. Ein Fett/Öl-Molekül (Triacylglyzerid) wird dabei mit drei Methanolmolekülen zu Glyzerin und drei Fettsäuremethylestern umgesetzt. So ergeben 10 Liter Pflanzenöl und 1 Liter Methanol ca. 10 Liter Biodiesel und 1 Liter Rohglyzerin.

Bevorzugt weist Rohglyzerin (R) die folgende Zusammensetzung auf:

80 bis 90 Gew.-% Glyzerin,

10 bis 20 Gew.-% Wasser,

0 bis 10 Gew.-% anorganische Salze und

0 bis 1 Gew.-% organische Verbindungen,

wobei die Gew.-%-Angaben jeweils auf das Gesamtgewicht des Rohglyzerins (R) bezogen sind.

Besonders bevorzugt ist Rohglyzerin (R) mit der folgenden Zusammensetzung:

80 bis 82 Gew.-% Glyzerin,

10 bis 15 Gew.-% Wasser,

5 bis 7 Gew.-% anorganische Salze enthaltend Natriumchlorid und

0,01 bis 0,5 Gew.-% Methanol

wobei die Gew.-%-Angaben jeweils auf das Gesamtgewicht des Rohglyzerins (R) bezogen sind.

Die anorganischen Salze werden auch als Asche bezeichnet. Die Asche stellt dabei den Glührückstand des Rohglyzerins (R) dar.

Das Rohglyzerin (R) kann selbstverständlich weitere Komponenten enthalten, die bei der Herstellung von Rohglyzerin (R) als Verunreinigungen anfallen. Bevorzugt liegt der Gehalt an weiteren Komponenten im Rohglyzerin (R) jedoch unterhalb von 1 Gew.-%, mehr bevorzugt unterhalb von 0,5 Gew.-% und insbesondere unterhalb von 0,1 Gew.-%, jeweils bezogen auf das Gesamtgewicht des Rohglyzerins (R).

Rohglyzerin (R) weist bei 20°C eine Dichte von 1,23 bis 1,27 g pro cm$^3$ auf. Die Viskosität von Rohglyzerin (R) liegt bei 20°C im Bereich von 700 mPa*s bis 1200 mPa*s. Wobei die Viskosität des Rohglyzerins (R) vom Wassergehalt und den gegebenenfalls im Rohglyzerin (R) enthaltenen anorganischen Salzen abhängt. Als organische Verbindungen enthält Rohglyzerin (R) bevorzugt Methanol, insbesondere in Konzentrationen im Bereich von 0,01 bis 0,5 Gew.-%, bezogen auf das Gesamtgewicht des Rohglyzerins (R). Als anorganische Salze sind bevorzugt Natriumchlorid und/oder Kalziumchlorid enthalten, insbesondere in Konzentrationen im Bereich von 5 bis 7 Gew.-%, bezogen auf das Gesamtgewicht des Rohglyzerins (R). Rohglyzerin (R) hat den Vorteil, dass es toxikologisch unbedenklich ist und biologisch abgebaut wird. Rohglyzerin (R) kann daher auch in ökologisch sensiblen Arealen als Bestandteil einer Formulierung zur Förderung von Erdöl eingesetzt werden.

In den letzten Jahren ist die Produktion von Biodiesel besonders in der europäischen Union rapide gestiegen. Die Produktion von Rohglyzerin (R) hat in der europäischen Union eine Menge von circa 1 Million Tonnen erreicht. Eine sinnvolle Verwertung des bei der Biodieselproduktion anfallenden Rohglyzerins (R) ist eine große, bisher ungelöste ökonomische Aufgabe. Die Erfindung ermöglicht eine sinnvolle Verwertung der bei der Biodieselproduktion anfallenden Abfälle (Rohglyzerin (R)). Rohglyzerin (R) hat zudem den Vorteil, dass es kostengünstig und in großen Mengen verfügbar ist.

Verwendung der Formulierung (F) als Mittel zur Erdölförderung

Besonders geeignet sind Formulierungen (F), die mindestens 10 Gew.-% Rohglyzerin (R) enthalten, bezogen auf das Gesamtgewicht der Formulierung (F). Gegenstand der Erfindung ist somit auch die Verwendung einer Formulierung (F), die mindestens 10 Gew.-% Rohglyzerin (R) enthält, bezogen auf das Gesamtgewicht der Formulierung (F), als Mittel zur Erdölförderung. Weiterhin Gegenstand der Erfindung ist auch die Verwendung einer wässrigen Formulierung (F), die mindestens 10 Gew.-% Rohglyzerin (R) enthält, bezogen auf das Gesamtgewicht der Formulierung (F), als Mittel zur Erdölförderung.

Weiterhin besonders geeignet, sind Formulierungen (F), die neben Rohglyzerin (R) Wasser enthalten. Gegenstand der Erfindung ist somit auch die Verwendung einer Formulierung (F), die 10 bis 99 Gew.-% Rohglyzerin (R), 1 bis 90 Gew.-% Wasser und 0 bis 20 Gew.-% mindestens eines anorganischen Salzes enthält, wobei die Gew.-%-Angaben jeweils auf das Gesamtgewicht der Formulierung (F) bezogen sind, als Mittel zur Erdölförderung.

Als anorganische Salze sind dabei Natriumchlorid und/oder Kalziumchlorid bevorzugt, wobei Kalziumchlorid besonders bevorzugt ist.

Die Viskosität, die Dichte, die Gefriertemperatur und die Endviskosität der Formulierungen (F) kann an die geologischen Bedingungen der Erdöllagerstätte angepasst werden. Wenn beispielsweise das Lagerstättenwasser (auch Formationswasser genannt) eine Dichte ($D_L$) aufweist, kann durch eine Konzentrationssteigerung des in der Formulierung (F) enthaltenen Rohglyzerins (R) die Dichte ($D_F$) der Formulierung (F) derart erhöht werden, dass $D_L < D_F$ ist. Hierdurch wird eine effektive Verdrängung des Lagerstättenwassers und letztendlich des Erdöls erreicht. Zur weiteren Erhöhung der Dichte ($D_F$) der Formulierung (F), können dieser anorganische Salze, bevorzugt Natriumchlorid und/oder Kalziumchlorid, zugesetzt werden.

Für den Fall, dass sich die Erdöllagerstätte in kalten Regionen der Erde befindet und eine Lagerstättentemperatur ($T_L$) aufweist und die oberirdische Außentemperatur ($T_{AT}$) ist kann die Gefriertemperatur ($T_{GF}$) der Formulierung (F) durch die Erhöhung der Konzentration an Rohglyzerin (R) derart reduziert werden, dass ($T_L$) größer oder gleich ($T_{GF}$) ist. Es ist auch möglich die Gefriertemperatur ($T_{GF}$) derart reduziert, dass ($T_{AF}$) größer oder gleich ($T_{GF}$) ist. Hierdurch wird der Einsatz der Formulierung auch in Gebieten möglich, bei denen oberirdische Temperaturen unterhalb des Gefrierpunkts herrschen, beispielsweise im Bereich von minus 50 bis 0 °C. Hierdurch wird der Einsatz der Formulierung (F) auch in Gebieten ermöglicht, in denen Permafrost herrscht.

Unter Gefriertemperatur wird die Temperatur verstanden, bei der die Formulierung (F) erstarrt, das heißt einen Feststoff ausbildet.

Für den Fall, dass die Formulierung (F) als Flutmittel zur Verdrängung von Erdöl aus der Erdöllagerstätte verwendet wird, können die Viskosität die Dichte und die Endviskosität der Formulierungen (F) an die Viskosität und die Dichte des Erdöls angepasst werden, um dessen Verdrängung zu optimieren.

Die Formulierung (F) kann darüber hinaus weitere Additive, wie beispielsweise Tenside, Harnstoff oder wasserlösliche verdickend wirkende Polymere, wie Celluloseether, Glucosylglucane, Xanthane oder Diutane sowie synthetische Polymere, wie Polyacrylamid oder Coypolymere aus Acrylamid min Sulfonsäuregruppenhaltigen Monomeren, enthalten.

Bevorzugt enthält die Formulierung (F) jedoch maximal 1 Gew.-%, besonders bevorzugt maximal 0,5 Gew.-% und insbesondere maximal 0,1 Gew.-% weiterer Additive, jeweils bezogen auf das Gesamtgewicht der Formulierung (F).

Die Gew.-%-Angaben der einzelnen Komponenten der Formulierung (F) werden im Allgemeinen so ausgewählt, dass ihre Summe 100 Gew.-% ergibt. Bevorzugt sind Formulierungen (F), die aus den vorstehend beschriebenen Komponenten, d.h. Rohglyzerin (R), ggf. Wasser, ggf. anorganische Salze bestehen.

Die Gew.-%-Angaben von Wasser sowie gegebenenfalls von Natriumchlorid und/oder Kalziumchlorid in der Formulierung (F) beinhalten nicht die Wassermenge sowie gegebenenfalls die Mengen von Natriumchlorid und/oder Kalziumchlorid, die bereits im Rohglyzerin (R) enthalten sind. Die Gew.-%-Angaben von Wasser sowie Natriumchlorid und/oder Kalziumchlorid in der Formulierung (F) sind als zusätzliche Wasser-und Natriumchlorid-und/oder Kalziumchloridmengen zu verstehen. Zur Berechnung der Gesamtmenge der in der Formulierung (F) enthaltenen Wassermenge sind somit die Wassermenge, die im Rohglyzerin (R) enthalten ist und die zusätzlich zugegebene Wassermenge zu addieren. Zur Berechnung der Gesamtmenge an Natriumchlorid und/oder Kalziumchlorid in der Formulierung (F) sind ebenfalls die im Rohglyzerin (R) enthaltenen Mengen an Natriumchlorid und/oder Kalziumchlorid und die zusätzlich zugegebenen Natriumchlorid-und/oder Kalziumchloridmengen zu addieren.

Weiterhin besonders geeignet, sind Formulierungen (F), die mindestens 80 Gew.-%, bevorzugt mindestens 90 Gew.-% und besonders bevorzugt mindestens 99 Gew.-% Rohglyzerin (R) enthalten. Gegenstand der Erfindung ist somit auch die Verwendung einer Formulierung (F), die mindestens 80 Gew.-%, bevorzugt mindestens 90 Gew.-% und besonders bevorzugt mindestens 99 Gew.-% Rohglyzerin (R) enthält, wobei die Gew.-%-Angaben jeweils auf das Gesamtgewicht der Formulierung (F) bezogen sind, als Mittel zur Erdölförderung.

Weiterhin besonders geeignet, sind Formulierungen (F), im Wesentlichen aus Rohglyzerin (R) bestehen. Hierunter werden vorliegend Formulierungen (F) verstanden, die maximal 0,5 Gew.-% und insbesondere maximal 0,1 Gew.-% weiterer Komponenten aufweisen, die Rohglyzerin (R) verschieden sind.

Formulierungen (F), die Konzentrationen an Rohglyzerin (R) von mindestens 80 Gew.-% aufweisen, wirken auf die mikrobiologische Fauna in der Erdöllagerstätte wachstumshemmend. Es wurde gefunden, dass bei Konzentrationen an Rohglyzerin (R) im Bereich von 1 bis 25 Gew.-%, bevorzugt im Bereich von 10 bis 25 Gew.-%, Rohglyzerin (R) das Wachstum von Mikroorganismen beschleunigt wird. Gegenstand der vorliegenden Erfindung ist somit auch die Verwendung einer Formulierung (F), die 10 bis 25 Gew.-% Rohglyzerin (R) enthält, bezogen auf das Gesamtgewicht der Formulierung (F), als Mittel zur Erdölförderung, insbesondere zur Beschleunigung des Wachstums von Mikroorganismen.

Ölförderverfahren unter Einsatz von Mikroorganismen sind im Stand der Technik als MEOR-Verfahren beschrieben (microbial enhanced oil recovery). Bei der erfindungsgemäßen Verwendung können die Mikroorganismen der Formulierung (F) zugesetzt werden.

Es wurde gefunden, dass die erfindungsgemäße Formulierung (F) als Flutmittele für die tertiäre Erdölförderung eingesetzte werden kann. Gegenstand der vorliegenden Erfindung ist somit auch die Verwendung einer Formulierung (F) als Flutmittel für die tertiäre Erdölförderung.

Bei der Verwendung der Formulierung (F) als Flutmittel für die tertiäre Erdölförderung sind Formulierungen (F) bevorzugt, die neben mindestens 10 Gew.-% Rohglyzerin (R) zusätzlich Wasser sowie gegebenenfalls Natriumchlorid und/oder Kalziumchlorid sowie gegebenenfalls zusätzliche Additive enthalten, wobei für die Konzentrationen die vorstehenden Ausführungen entsprechend gelten.

Darüber hinaus wurde gefunden, dass die erfindungsgemäße Formulierung (F) als Mittel zum Blockieren hoch permeabler Zonen in einer Erdöllagerstätte eingesetzt werden kann. Gegenstand der vorliegenden Erfindung ist somit auch die Verwendung einer Formulierung (F) als Mittel zum Blockieren hoch permeabler Zonen in einer Erdöllagerstätte. Bei der Verwendung der Formulierung (F) als Mittel zum Blockieren hoch permeabler Zonen in einer Erdöllagerstätte sind Formulierungen (F) bevorzugt, die Konzentrationen an Rohglyzerin (R) von mindestens 80 Gew.-% aufweisen.

Die erfindungsgemäße Formulierung (F) wird vorteilhaft in Erdöllagerstätten eingesetzt, die Temperaturen im Bereich von 0 bis 180°C aufweisen. Besonders bevorzugt ist der Einsatz der Formulierung (F) in Erdöllagerstätten, die eine Lagerstättentemperatur ($T_L$) unterhalb von 60°C aufweisen. Insbesondere bevorzugt ist der Einsatz der Formulierung (F) in Erdöllagerstätten, die eine Lagerstättentemperatur ($T_L$) im Bereich von 0 bis 40 °C, besonders bevorzugt im Bereich von 2 bis 30 °C aufweisen. Gegenstand der vorliegenden Erfindung ist somit auch die Verwendung der Formulierung (F) in einer Erdöllagerstätte, die eine Lagerstättentemperatur unterhalb von 60°C, bevorzugt im Bereich von 0 bis 40 °C, besonders bevorzugt im Bereich von 2 bis 30 °C aufweist, als Mittel zur Erdölförderung aus Erdöllagerstätten.

Durch den Einsatz der Formulierung (F) ist ein Ausgleich des Profils der Flutfront möglich (auch als Profilmodifikation bezeichnet). Gegenstand der vorliegenden Erfindung ist somit auch die Verwendung der Formulierung (F) als Mittel zu zum Ausgleich des Profils der Flutfront in einer Erdöllagerstätte.

Die erfindungsgemäße Formulierung (F) bildet bei Temperaturänderung kein Gel. Bei einer Temperatursteigerung wird die Viskosität der Formulierung (F) herabgesetzt, bei Temperaturerniedrigung steigt die Viskosität der Formulierung (F) an.

Die erfindungsgemäße Formulierungen (F) können durch einfache Verfahren hergestellt werden, beispielsweise durch einfaches Mischen der flüssigen Komponenten, sowie gegebenenfalls durch Auflösen fester Komponenten in den flüssigen Komponenten.

Für den Fall, dass die Formulierung (F) Wasser enthält, kann vollentsalztes Wasser, Leitungswasser, Meerwasser, teilentsalztes Meerwasser oder Wasser eingesetzt werden, das aus der Erdöllagerstätte gefördert wurde (sogenanntes Lagerstätten oder Formationswasser). Für den Fall, dass die Formulierung (F) anorganische Salze enthält, wird vorzugsweise Meerwasser oder Formationswasser eingesetzt.

Die Viskosität des unverdünnten Rohglyzerins (R) liegt bei einer Temperatur von 20°C im Bereich von 700 bis 1200 mPa*s und ist wesentlich höher als die Viskosität des Flutwassers, das beim konventionellen Fluten verwendet wird. Die Viskosität der Formulierung (F) hängt insbesondere von der Konzentration von Rohglyzerin (R) und Wasser ab. Je höher dabei die Rohglyzerinkonzentration ist, desto höher ist die Viskosität der Formulierung (F). Umgekehrt nimmt die Viskosität der Formulierung (F) mit zunehmender Wasserkonzentration ab, d.h. je höher die Wasserkonzentration der Formulierung (F) ist, desto niedriger ist die Viskosität der Formulierung (F). Durch Variation der vorstehend genannten Konzentrationen lässt sich somit die Viskosität der Formulierung (F) einstellen.

Ein weiterer Vorteil der erfindungsgemäßen Formulierung (F) besteht darin, dass die Viskosität der Formulierung (F) mit sinkender Temperatur zunimmt. Die Viskosität der Formulierung (F) kann so eingestellt werden, dass sie um Faktor 10 bis 100 höher ist, als dass in der Lagerstätte vorhandene Formationswasser. Unter Formationswasser wird vorliegend auch das Flutwasser verstanden, dass gegebenenfalls in einem vorgelagerten Schritt in die Lagerstätte, beispielsweise im Rahmen sekundärer Förderverfahren, eingepresst wurde. Durch die höherer Viskosität der Formulierung (F), gegebenenfalls in Verbindung mit einer erhöhten Dichte, wird das Formationswasser, das eine wesentlich niedriger Viskosität und Dichte aufweist effektiv verdrängt, wodurch eine Profilmodifikation der Flutfront sowie eine Mobilisierung von Erdöl in Stauzonen erreicht wird.

Die Formulierung (F) kann dabei in großen volumetrischen Massen in die Erdöllagerstätte eingepresst werden, beispielsweise in Mengen von 500 bis 50000 m$^3$.

Da die Viskosität der Formulierung (F) bei hohen Temperaturen abnimmt, hat es sich als vorteilhaft herausgestellt, die Formulierung (F) mit einer Temperatur ($T_F$) einzusetzen, die höher ist als die Lagerstättentemperatur ($T_L$).

Bei der Temperatur ($T_F$) ist die Viskosität der Formulierung (F) niedriger als bei der Temperatur ($T_L$). Dies hat zur Folge, dass die Formulierung (F) tief in die Erdöllagerstätte eindringen kann und dort insbesondere ausgewaschene Zonen, d.h. Zonen mit hoher Permeabilität ausfüllt. In der Erdöllagerstätte kühlt die Formulierung (F) ab, wodurch die Viskosität der Formulierung (F) ansteigt und die Beweglichkeit der Formulierung (F) deutlich abnimmt.

Rohglyzerin (R) löst sich leicht in Wasser, wodurch die Konzentration an Rohglyzerin (R) insbesondere am Rand und an der Flutfront relativ schnell abnimmt. Im Kernbereich der volumetrischen Zone ist die Beweglichkeit der Formulierung (F) wesentlich niedriger, im Idealfall praktisch gleich 0.

Verfahren zur Förderung von Erdöl aus einer unterirdischen Erdöllagerstätte:

Gegenstand der vorliegenden Erfindung ist auch ein Verfahren zur tertiären Förderung von Erdöl aus unterirdischen Erdöllagerstätten mit einer Lagerstättentemperatur $T_L$, in welche mindestens eine Injektionsbohrung und mindestens eine Produktionsbohrung abgeteuft sind, umfassend mindestens die folgenden Verfahrensschritte:

i) Injizieren eines Flutmittels durch mindestens eine Injektionsbohrung in die Erdöllagerstätte, wobei als Flutmittel eine Formulierung (F) verwendet wird, die eine Temperatur $T_F$ aufweist, die höher als die Temperatur $T_L$ ist,

ii) Abkühlen des Flutmittels aus Schritt i) in der Erdöllagerstätte und

iii) Injizieren eines weiteren Flutmittels durch mindestens eine Injektionsbohrung in die Erdöllagerstätte und Entnahme von Erdöl durch mindestens eine Produktionsbohrung.

Bei dem erfindungsgemäßen Verfahren zur Förderung von Erdöl handelt es sich um ein Verfahren zur tertiären Erdölförderung, d.h. es wird angewandt, nachdem die primäre Erdölförderung aufgrund des Eigendrucks der Lagerstätte zum Erliegen gekommen ist und man den Druck in der Lagerstätte durch Einpressen von Wasser und/oder Wasserdampf (sekundäre Förderung) oder durch Einpressen einer wässrigen Polymerlösung (tertiäre Förderung) aufrecht erhalten muss.

Für die im erfindungsgemäßen Verfahren eingesetzten Formulierungen (F) gelten die vorstehend zur Verwendung der Formulierung (F) gemachten Ausführungen und Bevorzugungen entsprechend.

Durch den Einsatz der Formulierung (F) in einem Verfahren zur Förderung von Erdöl aus einer unterirdischen Erdöllagerstätte lässt sich die Verwässerung der Produktion reduzieren und der Entölungsgrad der Erdöllagerstätte steigern.

Das erfindungsgemäße Verfahren hat den Vorteil, dass man auch in Lagerstätten mit niedriger Temperatur hochpermeable Zonen gezielt mittels der Formulierung (F) blockieren kann. Das Verfahren ermöglicht, auch abgekühlte (beispielsweise durch Wasserfluten), ausgewaschene Gesteinszonen in der Lagerstätte zu blockieren. Der Abstand zwischen dem Bohrloch (der Injektionsbohrung) und der Zone in der die Beweglichkeit der Formulierung (F) aufgrund des Viskositätsanstiegs abnimmt, ist bei dem erfindungsgemäßen Verfahren insbesondere durch die Menge an Rohglyzerin (R) und die Temperatur $T_F$ mit der die Formulierung (F) in die Erdöllagerstätte injiziert wird regelbar. Hierdurch wird eine effiziente Blockierung hochpermeabler Zonen erreicht, die Verwässerung der Produktion verringert und der Entölungsgrad erhöht.

In einer bevorzugten Ausführungsform wird das erfindungsgemäße Verfahren in Erdöllagerstätten angewendet, die eine Lagerstättentemperatur $T_L$ unterhalb von 60°C aufweisen, besonders bevorzugt im Bereich von 0 bis 40 °C und insbesondere im Bereich von 2 bis 30 °C.

Bei den Lagerstätten kann es sich um Lagerstätten für alle Sorten von Öl handeln, beispielsweise um solche für leichtes oder für schweres Öl. In einer Ausführungsform der Erfindung handelt es sich bei den Lagerstätten um Schweröllagerstätten, d.h. Lagerstätten, welche Erdöl mit einem API-Grad von weniger als 22,3° API enthalten. Der optimale Einsatzbereich für die Verwendung der Formulierung (F) sind die sogenannten "maturen" Lagerstätten mit Ölen, die mittlere oder kleine Viskosität aufweisen.

Die Viskosität der als Flutmittel verwendeten Formulierung (F) hängt vorweigend von der Konzentration des verwendeten Rohglyzerins (R) und von der Lagerstättentemperatur ab. Sie sollte an die Viskosität des in der Erdöllagerstätte vorhandenen Erdöls angepasst werden und kann mit Hilfe des Verhältnisses (A) zwischen der Flutmittel-Mobilität (Mw) und der Erdöl-Mobilität (Mö) genauer bestimmt werden.

$$A = Mw / M\ddot{o} = (krw / \mu w) / (krw / \mu\ddot{o}),$$

krw - relative Permeabilität der Erdöllagerstätte für das Flutmittel,

krö - relative Permeabilität der Erdöllagerstätte für Erdöl,

μö - Erdölviskosität,

μw - Viskosität des Flutmittels.

μw bezieht sich hierbei auf die Viskosität des Flutmittels unter den Bedingungen in der Erdöllagerstätte. Idealerweise wird die Viskosität des Flutmittels (unter den Bedingungen in der Erdöllagerstätte) so eingestellt, dass sich für A Werte < 1 ergeben. Bei A < 1 erwartet der Fachmann eine kolbenartige Verdrängung des Öls. Das optimale Verhältnis (A) zwischen der Flutmittel-Mobilität (Mw) und der Erdöl-Mobilität (Mö) ist insbesondere für hochviskose Öle in einigen Fällen nicht erreichbar, da man unrealistisch hohe Injektionsdrucke entwickeln muss. Man kann daher auch mit Werten A > 1 arbeiten. Aber schon eine geringere Erhöhung der Viskosität des Flutmittels verbessert tendenziell die Erdölausbeute.

Bei Optimierung der Eigenschaften des Flutmittels mit Rohglyzerin (R) wird in die Formel A = Mw / Mö als Viskosität des Flutmittels (μw) die Viskosität nach Abkühlen in der Lagerstätte eingesetzt (Endviskosität). Die Permeabilität wird in Darcy gemessen. Die Viskosität wird in mPa*s gemessen.

Das erfindungsgemäße Verfahren kann angewandt werden, sobald die Produktion bei sekundären Förderverfahren zu stark verwässert wird oder ein sogenannter Wasserdurchbruch registriert wird. Das ist in der Regel dann der Fall, wenn aus der Produktionsbohrung ein Gemisch entnommen wird, das mehr als 70 Gew.-%, besonders mehr als 90 Gew.-% Lagerstättenwasser enthält, bezogen auf das Gesamtgewicht des aus der Produktionsbohrung entnommenen Gemischs. Bei einem Wasserdurchbruch strömt Wasser durch hochpermeable Zonen von der Injektionsbohrung bis zur Produktionsbohrung. Hoch permeable Zonen müssen aber nicht zwingend durch das Wasserfluten erzeugt werden, sondern können auch natürlicherweise in einer Formation vorhanden sein. Weiterhin ist es möglich, dass permeable Zonen bereits in einem dem erfindungsgemäßen Verfahren vorausgehenden Verfahrensschritt geschaffen wurden.

Zur Vorbereitung des erfindungsgemäße Verfahrens kann es vorteilhaft sein, die Temperatur im Bereich der Injektionsbohrung zu messen und das Temperaturfeld der Lagerstätte im Bereich, der unter Einfluss des Flutens steht, zu bestimmen. Methoden zur Ermittlung des Temperaturfeldes einer Erdöllagerstätte sind dem Fachmann prinzipiell bekannt. Die Temperaturverteilung wird in der Regel aus Temperaturmessungen an bestimmten Stellen der Formation in Kombination mit Simulationsrechnungen vorgenommen, wobei man bei den Simulationsrechnungen unter anderem in die Formation eingebrachte Wärmemengen sowie die aus der Formation abgeführten Wärmemengen berücksichtigt. Alternativ kann jeder der Bereiche auch durch seine Durchschnittstemperatur charakterisiert werden. Für den Fachmann ist klar, dass die geschilderte Analyse der Temperaturfeldes nur eine Annäherung der tatsächlichen Verhältnisse in der Formation darstellt.

Im Zuge des erfindungsgemäßen Verfahrens werden hoch permeabler Zonen der Erdöllagerstätte im Bereich zwischen den Injektionsbohrungen und den Produktionsbohrungen durch Injizieren der Formulierung (F) durch die mindestens eine Injektionsbohrung blockiert.

*Verfahrensschritt i)*

Erfindungsgemäß wird hierzu mindestens eine Formulierung (F) verwendet. Es ist auch möglich, nacheinander zwei oder mehrere Formulierungen (F) zu injizieren, die sich in ihrer Zusammensetzung unterscheiden.

Erfindungsgemäß wird die Formulierung (F) durch eine oder mehrere Injektionsbohrungen in die Erdöllagerstätte injiziert. Nach dem Injizieren der Formulierung (F) kann gegebenenfalls noch mit Wasser nachgeflutet werden, um die Formulierung (F) weiter in die Erdöllagerstätte zu verdrängen. Im Rahmen der vorliegenden Erfindung wird als Nachfluten das Wasservolumen bezeichnet, dass direkt nach dem Injizieren der Formulierung (F) injiziert wird, um die Formulierung (F) unter Tage an die gewünschte Stelle der Erdöllagerstätte zu bringen. Dies ist aufgrund der niedrigen Viskosität der Formulierung (F) jedoch nicht zwingend erforderlich. In einer Ausführungsform wird nach Verfahrensschritt i) nicht Nachgeflutet.

Zur Ausführung des Verfahrens werden in den Erdöllagerstätten mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen.

Die Lagerstättentemperatur kann sich durch die Anwendung des erfindungsgemäßen Verfahrens üblicherweise zumindest im Bereich zwischen den Injektionsbohrungen und den Produktionsbohrungen ändern.

In Verfahrensschritt i) werden ein oder mehrere Flutmittel durch die mindestens eine Injektionsbohrung in die Erdöllagerstätte injiziert.

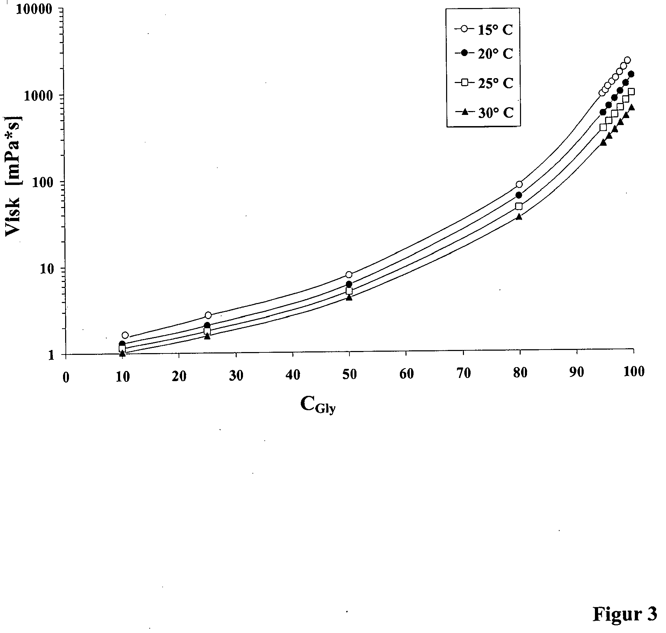

Bevorzugt liegt $T_F$, mit der die Formulierung (F) in die Erdöllagerstätte injiziert wird in Verfahrensschritt i) mindestens 5°C über $T_L$, bevorzugt mindestens 15, besonders bevorzugt mindestens 20 und insbesondere mindestens 25 °C über $T_L$. Es ist auch möglich die Formulierung (F) mit höheren Temperaturen $T_F$ einzusetzen. Die Temperatur $T_F$ liegt vorzugsweise jedoch unterhalb des Siedepunkts der Formulierung (F) unter den Druckbedingungen der Erdöllagerstätte. Die Endviskosität der Formulierung (F) in der Lagerstätte hängt von der Konzentration der Formulierung (F) und von der Lagerstättentemperatur ab. Unter Endviskosität der Formulierung (F) versteht man die Viskosität der Formulierung (F) unter Lagerstättenbedingungen (eventuell nach dem Abkühlen). Je größer die Differenz zwischen $T_F$ und $T_L$ ist, desto tiefer dringt die Formulierung (F) in die Lagerstätte ein (bei vorgegebener $T_L$). Die Wirkung der Temperatur auf die Viskosität wird in Figur 3 dargestellt.

Die Temperatur der eingesetzten Formulierung (F) ist von der Lagerstättentemperatur $T_L$ abhängig. Um die vorstehenden Temperaturbedingungen zu erfüllen, kann es notwendig sein, die Formulierung (F) vor dem Injizieren zu erwärmten. Dies kann durch geeignete Heizelemente erfolgen, die oberirdisch oder innerhalb der Injektionsbohrung angeordnet sein können. Durch das Erwärmen der Formulierung (F) wird die Viskosität der Formulierung (F) abgesenkt. Die Formulierung (F) kann dadurch weit in die Erdöllagerstätte eindringen und dort insbesondere Zonen hoher Permeabilität ausfüllen. Nach dem tiefen Eindringen in der Lagerstätte kühlt sich die Formulierung (F) ab und die Viskosität der Formulierung (F) steigt. Dadurch steigt auch die Effizienz der Profilmodifikation und der Entölungsgrad.

Das Erwärmen der Formulierung (F) vor dem Injizieren verfolgt folgende Ziele:

- tiefes Einbringen der Formulierung (F) in die Lagerstätte,
- Eintragen von Wärme in die Lagerstätte,
- Erleichterung des Verpumpens der Formulierung (F).

Wenn die Formulierung (F) als Flutmittel verwendet wird, zum Beispiel bei Entwicklung der Lagerstätten mit relativ homogener Permeabilität, wird nach Formel (A) die optimale Konzentration der Formulierung (F) definiert, und die Formulierung (F) wird ohne Vorerwärmen in die Lagerstätte eingepresst.

*Verfahrensschritt ii)*

In Verfahrensschritt ii) wird die als Flutmittel eingesetzte Formulierung (F) in der Erdöllagerstätte abgekühlt. Dies erfolgt vorzugsweise dadurch, dass die Formulierung (F) Wärme an die umliegenden Gesteinsformationen, das Formationswasser sowie gegebenenfalls das Erdöl abgibt.

In einer bevorzugten Ausführungsform wird die Formulierung (F) in Verfahrensschritt ii) soweit abgekühlt, dass $T_F$ maximal 10°C über $T_L$ liegt. Wie vorstehend beschrieben, nimmt die Viskosität der Formulierung (F) durch das Abkühlen zu, wodurch die Beweglichkeit der Formulierung (F) abnimmt und hoch permeable Zonen blockiert werden

Vor der Durchführung des Verfahrensschritts iii) kann eine weiteres Mittel zum Blockieren hochpermeabler Zonen in die Erdöllagerstätte injiziert werden. Das weitere Mittel zum Blockieren hochpermeabler Zonen ist dabei von der Formulierung (F) in Verfahrensschritt i) und ii) verschieden. Das Injizieren des weiteren Mittels zum Blockieren hochpermeabler Zonen kann vor oder nach dem Abkühlen der Formulierung (F) erfolgen.

Als weiteres Mittel zum Blockieren hochpermeabler Zonen sind Formulierungen (F1) geeignet, die unter den Bedingungen in der Erdöllagerstätte eine hohe Viskosität aufweisen. Das weitere Mittel zum Blockieren hochpermeabler Zonen bildet in der Erdöllagerstätte bevorzugt eine Gelbank aus.

Das weitere Mittel zum Blockieren hochpermeabler Zonen grenzt damit die in Verfahrensschritt i) injizierte Formulierung (F) ab. Bei dem Injizieren eines weiteren Flutmittels in Verfahrensschritt iii) wird somit eine nachträglicher Verdünnung der Formulierung (F) zum Beispiel durch Wasserfluten verhindert. Hierdurch wird die Formulierung (F) von dem weiteren Flutmittel abgegrenzt.

Als weiteres Mittel zum Blockieren hochpermeabler Zonen sind Formulierungen (F1) besonders bevorzugt, die 10 bis 40 Gew.-% Rohglyzerin (R), 0,1 bis 40 Gew.-% Celluloseether und 2 bis 40 Gew.% Harnstoff enthalten, wobei die Gew.%-Angaben jeweils auf das Gesamtgewicht der Formulierung (F1) bezogen sind. Unter Wirkung der Lagerstättentemperatur bilden die Formulierungen (F1) Gele mit Viskosität, die weit über der Viskosität des Rohglyzerins (R) liegen.

Als weiteres Mittel zum Blockieren hochpermeabler Zonen in Lagerstätten mit Temperaturen, die unter 60 °C liegen, können auch bekannte anorganische wässrige Mischungen auf Basis von Harnstoff, Aluminiumhydrochlorid und Urotropin eingesetzt werden.

Die Formulierung (F1) bildet unter den Bedingungen in der Erdöllagerstätte ein Gel.

Nach der Beendigung des Verfahrensschritt ii) und nach injizieren der Formulierung (F1) kann eine Pause von ein bis drei Tagen eingelegt werden. Dies ist vorteilhaft, um die Gelbildung der Formulierung (F1) zu unterstützen

*Verfahrensschritt iii)*

In Verfahrensschritt iii) werden ein oder mehrere weitere Flutmittel in die Erdöllagerstätte injiziert und die Förderung von Erdöl durch mindestens eine Produktionsbohrung wird fortgesetzt. Als weiter Flutmittel können beispielsweis Stickstoff, Kohlendioxid, Wasser und Wasser, das übliche, dem Fachmann bekannte Additive wie Verdicker und Tenside enthält, bevorzugt Wasser oder Wasser enthaltend Additive eingesetzt.

Das "weitere Flutmittel" kann ein konventionelles Flutmittel sein, das vorwiegend zum Verdrängen des Erdöls eingesetzt wird (Wasserfluten, Polymerfluten, Rohglyzerinfluten). Um den Ausbeutegrad zu steigern, soll die Mobilität der Formulierung (F), die in Schritt i) verwendet wird, unter Lagerstättenbedingungen (Endmobilität) kleiner sein als die Mobilität des Erdöls und kleiner sein als die Mobilität des weiteren Flutmittels, das in Schritt iii) eingesetzt wird. Die Mobilität des weiteren Flutmittels in Schritt iii) soll gleich oder kleiner als die Mobilität des Erdöls in der Lagerstätte sein. Dies ermöglicht eine effiziente Verdrängung des Erdöls und eine minimale Störung der Lagerstättenzonen, die mit Formulierung (F) aus i) verfüllt sind. Die Mobilität der Formulierung (F) aus i) wird durch die Rohglyzerinkonzentration und den Salzgehalt gesteuert, und die Mobilität der Formulierung (F) aus iii) wird beispielsweise durch die Konzentration des entsprechenden Verdickers gesteuert. Die untersuchte Abhängigkeit der Viskosität (Mobilität) von Rohglyzerinkonzentration ist in Figur 3 dargestellt.

Gegenstand der vorliegenden Erfindung ist somit auch ein Verfahren, das dadurch gekennzeichnet ist, dass die Mobilität der in Verfahrensschritt i) verwendeten Formulierung (F) unter Lagerstättenbedingungen (Endmobilität) kleiner als die Mobilität des Erdöls und kleiner als die Mobilität des weiteren Flutmittels aus Verfahrensschritt iii) ist, wobei die Mobilität des weiteren Flutmittels aus Verfahrensschritt iii) gleich oder kleiner als die Mobilität des Erdöls ist.

Mit dem Begriff "Erdöl" ist in diesem Zusammenhang selbstverständlich nicht phasenreines . Öl gemeint, sondern gemeint sind die üblichen, Öl und Formationswasser umfassenden Emulsionen, welche aus Erdöllagerstätten gefördert werden.

Durch die Injektion des weiteren Flutmittels bildet sich im. Bereich zwischen der Injektions- und der Förderbohrung (Produktionsbohrung) eine Zone aus, in der das Erdöl verdrängt wird.

Die Ölförderung gemäß Verfahrensschritt iii) kann nach üblichen Methoden durchgeführt werden, beispielsweise durch Einpressen eines oder mehrerer weiterer Flutmittel durch mindestens eine Injektionsbohrung in die Erdöllagerstätte, wobei Erdöl aus der mindestens eine Produktionsbohrung entnommen wird.

Als weiteres Flutmittel wird bevorzugt eine Formulierung (F) eingesetzt, die eine niedrigere Rohglyzerinkonzentration (R) aufweist, als die in Schritt i) verwendete Formulierung (F). Gegenstand der vorliegenden Erfindung ist daher auch ein Verfahren bei dem als weiteres Flutmittel in Schritt iii) eine Formulierung (F) verwendet wird, die eine niedrigere Rohglyzerinkonzentration (R) aufweist, als die in Schritt i) verwendete Formulierung (F).

Bevorzugt enthält die in Schritt iii) verwendete Formulierung (F) mindestens 10 Gew.-% weniger Rohglyzerin (R) als die in Schritt i) eingesetzte Formulierung (F).

Bei der mindestens einen Injektionsbohrung, durch die in Verfahrensschritt iii) das weitere Flutmittel eingepresst wird, kann es sich um die bereits zum Injizieren der Formulierung (F) in Schritt i) verwendete Injektionsbohrung handeln. Es ist auch möglich, das weitere Flutmittel im Verfahrensschritt iii) durch eine andere geeignete Injektionsbohrung einzupressen.

Die Erdölförderung kann selbstverständlich auch mittels anderer, dem Fachmann bekannter Methoden, fortgesetzt werden. Beispielsweise kann man als weiteres Flutmittel auch wässrige Lösungen silikathaltiger Stoffe oder verdickender Polymere einsetzen (tertiäre Förderung). Hierbei kann es sich um synthetische Polymere wie beispielsweise Polyacrylamid oder Acrylamid umfassende Polymere handeln. Darüber hinaus ist es auch möglich Biopolymere einzusetzen, wie beispielsweise Polysaccharide.

Es ist auch möglich, im Anschluss an Verfahrensschritt iii) nochmals die Verfahrensschritte i), ii) und iii) durchzuführen. Dies kann in regelmäßigen Abständen erfolgen, beispielsweise einmal pro Jahr. In der Regel wird das erfindungsgemäße Verfahren wiederholt, wenn bei der Erdölförderung in Verfahrensschritt iii) aus der Produktionsbohrung ein Wasserdurchbruch registriert wird. Insbesondere wird das Verfahren wiederholt, wenn bei der Erdölförderung in Verfahrensschritt iii) die kritische Produktionsverwässerung erreicht wird. Diese liegt üblicherweise vor, wenn die Produktionsverwässerung über 70 bis 90 Gew.-% liegt. Dies bedeutet, dass aus der Produktionsbohrung ein Gemisch entnommen wird, dass 70 bis 90 Gew.-% Lagerstättenwasser enthält, bezogen auf das Gesamtgewicht der aus der Produktionsbohrung entnommenen Mischung.

Vorteile

Das erfindungsgemäße Verfahren zur Erdölförderung hat die folgenden Vorteile. Die in der Formulierung (F) enthaltenen Komponenten sind biologisch abbaubar und ökologisch weitestgehend unbedenklich. Das erfindungsgemäße Verfahren zur Förderung von Erdöl ermöglicht ein effizientes Verdrängen des Erdöles und eine Modifikation des Flutprofiles durch die eventuelle Blockierung permeabler Bereiche und Kanäle in der Erdöllagerstätte, wodurch der schnelle Wasserdurchbruch verhindert wird. Dies ist auch in relativ großem Abstand von der Injektionsbohrung möglich. Das erfindungsgemäße Verfahren ist darüber hinaus kostengünstig, insbesondere durch den Einsatz von Rohglyzerin (R) und erlaubt eine effiziente Profilmodifikation auch in Erdöllagerstätten mit relativ niedrigen Temperaturen.

Die Erfindung wird nachfolgend anhand der folgenden Ausführungsbeispiele und Figuren näher erläutert.

Figur 1:   Abhängigkeit der Dichte einer Formulierung (F) enthaltend Wasser und Glyzerin von der Glyzerinkonzentration

Figur 2:   Abhängigkeit der Siedetemperatur einer Formulierung (F) enthaltend Wasser und Glyzerin von der Glyzerinkonzentration

Figur 3:   Abhängigkeit der Viskosität einer Formulierung (F) enthaltend Wasser und Glyzerin von der Glyzerinkonzentration

Figur 4:   Schema eines Erdöllagerstätten-Abschnitts vor Beginn des erfindungsgemäßen Verfahrens

Figur 5:   Schema eines Erdöllagerstätten-Abschnitts nach Durchführung von Verfahrensschritt i)

Figur 6:   Schema eines Erdöllagerstätten-Abschnitts nach Abkühlung der Formulierung (F) (Verfahrensschritt ii))

Figur 7:   Schema eines Erdöllagerstätten-Abschnitts nach injizieren des weiteren Mittels zum Blockieren hochpermeabler Zonen (Formulierungen (F1))

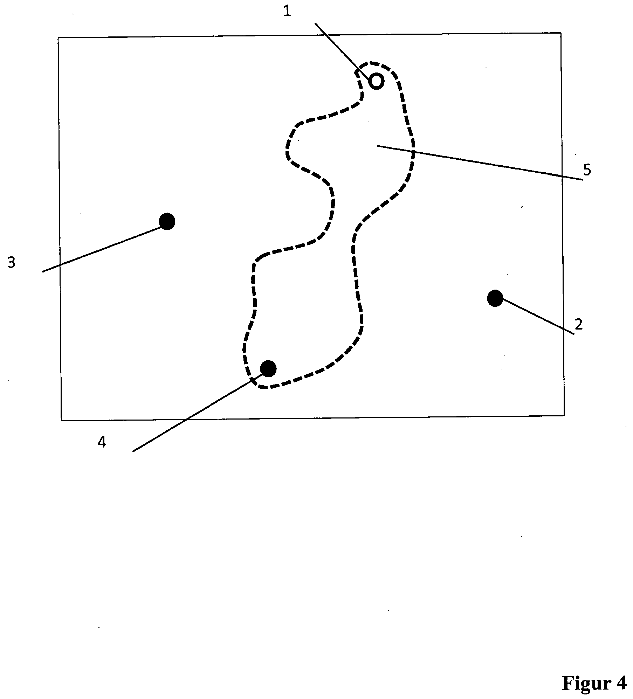

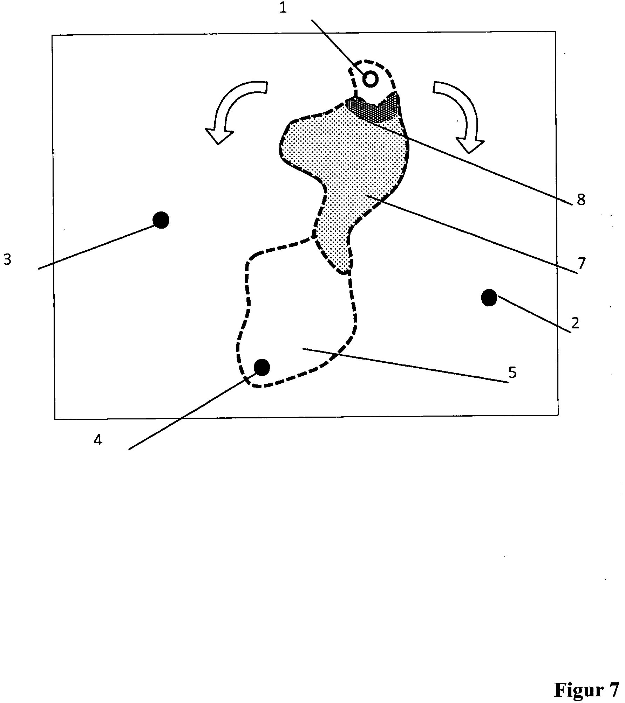

In den Figuren 4 bis 7 haben die Bezugszeichen die folgende Bedeutung:

1         Injektionsbohrung
2, 3, 4   Produktionsbohrungen
5         Zone hoher Permeabilität (ausgewaschene Zone)
6         Nahzone, die mit der Formulierung (F) vor dem Abkühlen verfüllt ist
7         Zone, die mit der Formulierung (F) nach dem Abkühlen verfüllt ist
8         Gelbank

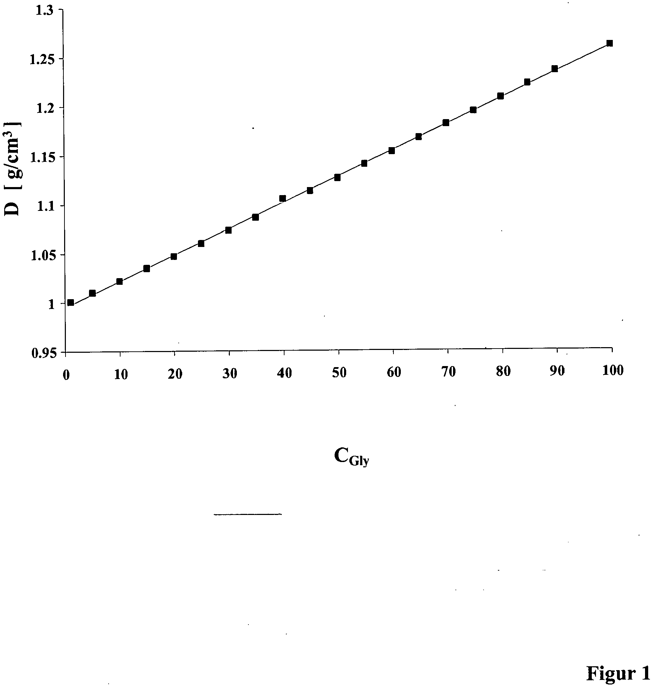

Figur 1 zeigt die Abhängigkeit der Dichte (bei 20 °C) der Formulierung (F) enthaltend Glyzerin und Wasser vom Glyzeringehalt. Auf der Ordinate (Y-Achse) ist die Dichte (D) in g/cm$^3$ aufgetragen. Auf der Abszisse (X-Achse) ist die Glyzerinkonzentration ($C_{Gly}$) in Gew.-% aufgetragen.

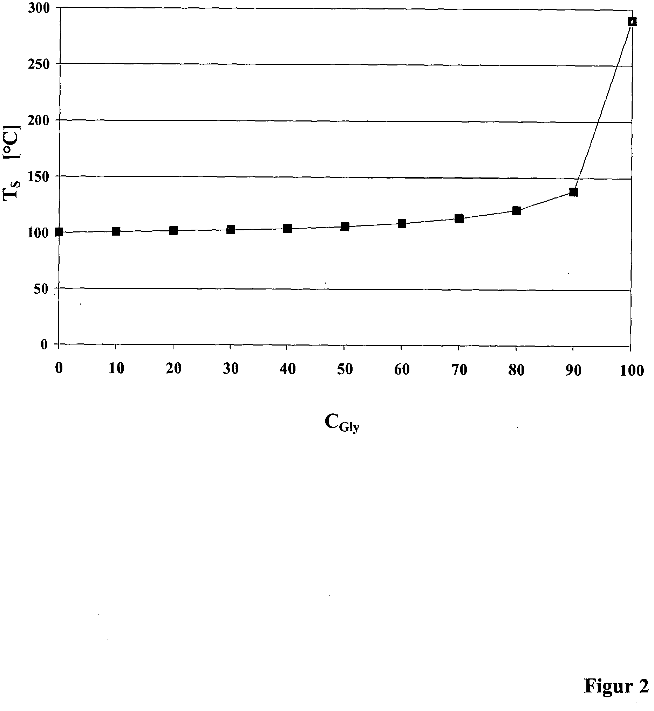

Figur 2 zeigt die Abhängigkeit der Siedetemperatur der Formulierung (F) enthaltend Glyzerin und Wasser vom Glyzeringehalt bei Normaldruck. Auf der Ordinate (Y-Achse) ist die Siedetemperatur ($T_S$) in °C aufgetragen. Auf der Abszisse (X-Achse) ist die Glyzerinkonzentration ($C_{Gly}$) in Gew.-% aufgetragen.

Figur 3 zeigt die Abhängigkeit der Viskosität (bei unterschiedlichen Temperaturen) der Formulierung (F) enthaltend Glyzerin und Wasser vom Glyzeringehalt. Auf der Ordinate (Y-Achse) ist die Viskosität (Visk) in mPa*s aufgetragen. Auf der Abszisse (X-Achse) ist die Glyzerinkonzentration ($C_{Gly}$) in Gew.-% aufgetragen.

Figur 4 zeigt eine Erdöllagerstätte, nach langjährigem Fluten, die eine inhomogene Permeabilität aufweist. Der Bereich 5 stellt eine Zone hoher Permeabilität dar, die zwischen der Injektionsbohrung 1 und der Produktionsbohrung 4 liegt. Die hydrodynamische Kommunikation zwischen den Bohrungen 1 und 4 ist sehr gut. Außerhalb der Zone 5 befinden sich in der Lagerstätte Bereiche mit Erdöl (sogenanntes Stauöl). In der Zone 5 ist eine Lagerstättentemperatur von 20 °C prognostiziert. Durch die Injektionsbohrung 1 wird eine Formulierung (F) injiziert, die 85 Gew.-% Rohglyzerin (R) und 15 Gew.-% Wasser enthält.

Die Temperatur ($T_F$) der Formulierung (F) entspricht zunächst der oberirdischen Umgebung/Lagerungstemperatur und beträgt 15 °C. Bei dieser Temperatur weist die Formulierung (F) eine Viskosität von 100 mPa*s auf. Die Erdölviskosität (unter Lagerstättenbedingungen) weist 40 mPa*s auf.

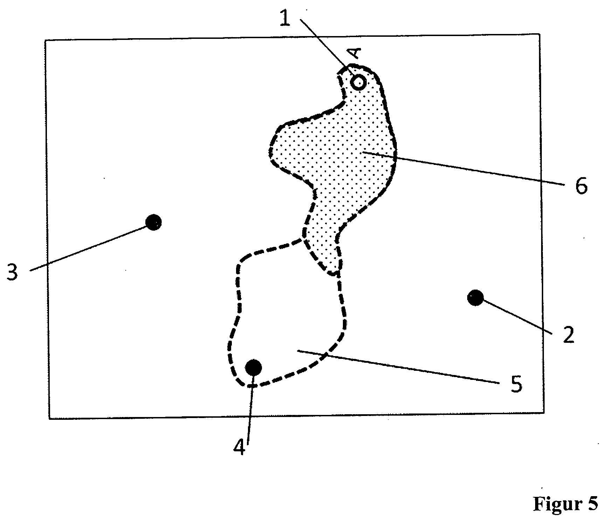

Um die Viskosität der Formulierung (F) vor dem Einpressen in die Erdöllagerstätte gezielt zu reduzieren, wird die Formulierung (F) oberirdisch auf 40 °C erwärmt. Hierdurch wird die Viskosität der Formulierung (F) auf 10 mPa*s reduziert. Anschließend wird die Formulierung (F) durch die Injektionsbohrung 1 injiziert. Die niedrigviskose Formulierung (F) folgt dabei den Flutwegen, die früher das Flutwasser bei der sekundären Förderung genommen hat. Hierdurch wird die Nahzone 6 der Injektionsbohrung 1 mit der Formulierung (F) gefüllt (Figur 5).

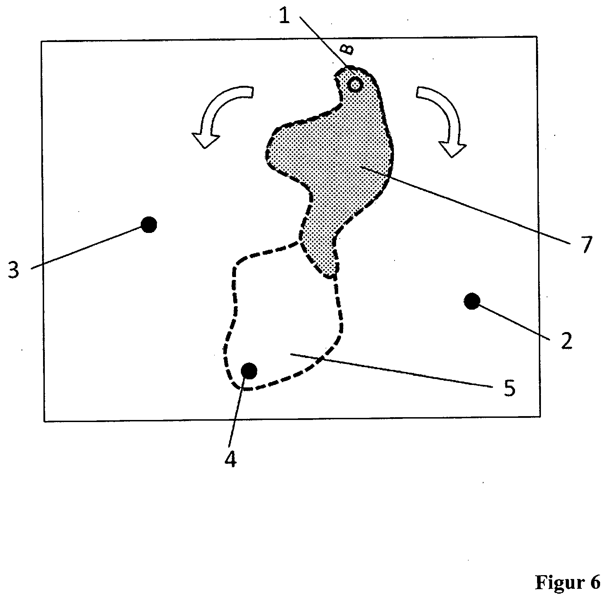

Durch die niedrige Viskosität der Formulierung (F) kann diese relativ tief in die Zone 5 eindringen. Nach dem Abkühlen der Formulierung (F) in der Lagerstätte, unter Einwirkung der niedrigen Lagerstättentemperatur ($T_L$) steigt die Viskosität der Formulierung (F) in der Nahzone 6 auf 70 bis 80 mPa*s an und es bildest sich die Zone 7 aus (siehe Figur 6). Die Formulierung (F) bildet in der Zone 7 einen großen hydraulischen Widerstand aus.

Anschließend wird Verfahrensschritt iii) durchgeführt und es wird ein weiteres Flutmittel (beispielsweise Wasser) durch die Injektionsbohrung injiziert (siehe Figur 6). Aufgrund des großen hydraulischen Widerstands in der Zone 7 nimmt das weitere Flutmittel andere Wege (durch die gebogenen Pfeile symbolisiert). Hierdurch wird Erdöl, das außerhalb der hoch permeablen Zone 5 lagert verdrängt und kann durch die Produktionsbohrungen 2 und 3 entnommen werden.

In Figur 8 ist eine weitere Ausführungsform gezeigt. Hierbei wird vor oder nach Abkühlung der Formulierung (F) und Ausbildung der Zone 7 nicht direkt ein weiteres Flutmittel (beispielsweise Wasser) injiziert. Stattdessen wird zunächst ein weiteres Mittel zum Blockieren hochpermeabler Bereiche injiziert. Da die Temperatur der Lagerstätte niedrig ist, wird bevorzugt die Formulierung auf Basis von Harnstoff, Aluminiumhydrochlorid und Urotropin verwendet. Diese Formulierung vergelt in dem Nahbereich der Injektionsbohrung. Durch die Injektionsbohrung wird eine relativ kleine Portion dieser Formulierung injiziert. Die Formulierung bildet in der Erdöllagerstätte zwischen Zone 7 und der Injektionsbohrung eine hochviskose Gelbank 8 aus. Hierdurch wird die Zone 7 vor einer Verdünnung durch das nachfolgend eingesetzte weitere Flutmittel (beispielsweise Wasser) geschützt. Hierdurch wird die Dynamik/Bewegung der Zone 7 sowie die Verdünnung des Rohglyzerins (R) in der Zone 7 minimiert.

Nachfolgend wird ein weiteres Flutmittel durch die Injektionsbohrung 1 injiziert, zum Beispiel Wasser oder verdicktes Wasser. Es ist optimal, wenn die Viskosität des weiteren Flutmittels (Nachflutmittels) wesentlich kleiner ist als die Endviskosität des Rohglyzerins (R) in der Zone 7 und gleich oder etwas höher ist als die Erdölviskosität. Hierdurch wird Erdöl, das außerhalb der hoch permeablen Zone 5 lagert, verdrängt und kann durch die Produktionsbohrungen 2 und 3 entnommen werden.

Es ist auch möglich die Formulierung (F1) vor dem Abkühlen der Formulierung (F) in die Erdöllagerstätte zu injizieren.

Dieses Beispiel beschreibt eine Ausführungsvariante des Verfahrens bei der Weiterentwicklung einer "maturen" Lagerstätte mit ausgeprägter Inhomogenität der Permeabilität. Hauptsinn des Einpressens der Formulierung (F) (Schritt i)) in die Lagerstätte ist dabei die Modifikation des Flutprofiles.

Ein anderer wichtiger Verwendungsbereich des Verfahrens ist der Einsatz der Formulierung (F) vorweigend für die Verdrängung des Erdöls. In diesem Fall wird die Lagerstätte mit der Formulierung (F) geflutet (das Verfahren begrenzt sich dann auf Schritt i)). Hierzu werden konventionelle Technologien verwendet.

## Patentansprüche

1. Verfahren zur tertiären Förderung von Erdöl aus unterirdischen Erdöllagerstätten mit einer Lagerstättentemperatur $T_L$, in welche mindestens eine Injektionsbohrung und mindestens eine Produktionsbohrung abgeteuft sind, umfassend mindestens die folgenden Verfahrensschritte:

   i) Injizieren eines Flutmittels durch mindestens eine Injektionsbohrung in die Erdöllagerstätte, wobei als Flutmittel eine Formulierung (F) verwendet wird, die eine Temperatur $T_F$ aufweist, die höher als die Temperatur $T_L$ ist,
   ii) Abkühlen des Flutmittels aus Schritt i) in der Erdöllagerstätte und
   iii) Injizieren eines weiteren Flutmittels durch mindestens eine Injektionsbohrung in die Erdöllagerstätte und Entnahme von Erdöl durch mindestens eine Produktionsbohrung,

wobei die Formulierung (F) Rohglyzerin (R) enthält, das die folgende Zusammensetzung aufweist: 80 bis 90 Gew.-% Glyzerin, 10 bis 20 Gew.-% Wasser, 0 bis 10 Gew.-% anorganische Salze und 0 bis 1 Gew.-% organischer Verbindungen, wobei die Gew.-%-Angaben jeweils auf das Gesamtgewicht des Rohglyzerins (R) bezogen sind.

2. Verfahren gemäß Anspruch 1, **dadurch gekennzeichnet, dass** die Formulierung (F) mindestens 10 Gew.-% Rohglyzerin (R) enthält, bezogen auf das Gesamtgewicht der Formulierung (F).

3. Verfahren gemäß Anspruch 1 oder 2, **dadurch gekennzeichnet, dass** die Formulierung (F) 10 bis 99 Gew.-% Rohglyzerin (R), 1 bis 90 Gew.-% Wasser und 0 bis 20 Gew.-% mindestens eines anorganischen Salzes enthält, wobei die Gew.-%-Angaben jeweils auf das Gesamtgewicht der Formulierung (F) bezogen sind.

4. Verfahren gemäß Anspruch 1 oder 2, **dadurch gekennzeichnet, dass** die Formulierung (F) mindestens 80 Gew.-%, bevorzugt mindestens 90 Gew.-% und besonders bevorzugt mindestens 99 Gew.-% Rohglyzerin (R) enthält, wobei die Gew.-%-Angaben jeweils auf das Gesamtgewicht der Formulierung (F) bezogen sind.

5. Verfahren gemäß einem der Ansprüche 1 bis 4, **dadurch gekennzeichnet, dass** die Mobilität der in Verfahrensschritt i) verwendeten Formulierung (F) unter Lagerstättenbedingungen (Endmobilität) kleiner als die Mobilität des Erdöls und kleiner als die Mobilität des weiteren Flutmittels aus Verfahrensschritt iii) ist, wobei die Mobilität des weiteren Flutmittels aus Verfahrensschritt iii) gleich oder kleiner als die Mobilität des Erdöls ist.

6. Verfahren gemäß Anspruch 1 oder 2, **dadurch gekennzeichnet, dass** die Lagerstättentemperatur $T_L$ unterhalb von 60°C liegt.

7. Verfahren gemäß einem der Ansprüche 1 bis 6, **dadurch gekennzeichnet, dass** das Flutmittel in Schritt ii) auf eine Temperatur abgekühlt wird, die maximal 10°C über der Lagerstättentemperatur $T_L$ liegt.

8. Verfahren gemäß einem der Ansprüche 1 bis 7, **dadurch gekennzeichnet, dass** die Lagerstättentemperatur $T_L$ im Bereich von 0 bis 40°C, besonders bevorzugt im Bereich von 2 bis 30 °C liegt.

9. Verfahren gemäß einem der Ansprüche 1 bis 8, **dadurch gekennzeichnet, dass** die in Schritt i) als Flutmittel verwendete Formulierung (F) vor dem Injizieren in die Erdöllagerstätte zur Einstellung der Temperatur $T_F$ erwärmt wird.

10. Verfahren gemäß einem der Ansprüche 1 bis 9, **dadurch gekennzeichnet, dass** die Formulierung (F) als Mittel zum Blockieren hochpermeabler Zonen in der Erdöllagerstätte eingesetzt wird.

11. Verfahren gemäß Anspruch 10, **dadurch gekennzeichnet, dass** nach Schritt i) oder nach Schritt ii) ein weiteres Mittel zum Blockieren hoch permeabler Bereich in die Erdöllagerstätte injiziert wird.

12. Verfahren gemäß einem der Ansprüche 1 bis 11, **dadurch gekennzeichnet, dass** als weiteres Flutmittels in Schritt iii) eine Formulierung (F) verwendet wird, die eine niedrigere Rohglyzerinkonzentration (R) aufweist, als die in Schritt i) verwendete Formulierung (F).

13. Verfahren gemäß einem der Ansprüche 10 bis 12, **dadurch gekennzeichnet, dass** als weiteres Mittel zum Blockieren hoch permeabler Zonen eine Formulierung verwendet wird, die 10 bis 40 Gew.-% Rohglyzerin (R), 0,1 bis 40 Gew.-% Celluloseether und 2 bis 40 Gew.% Harnstoff enthält, wobei die Gew.%-Angaben jeweils auf das Gesamtgewicht der Formulierung bezogen sind.

**Claims**

1. A process for tertiary production of mineral oil from underground mineral oil deposits having a deposit temperature $T_D$, into which at least one injection well and at least one production well have been sunk, comprising at least the following process steps:

   i) injecting a flooding composition through at least one injection well into the mineral oil deposit, using, as the flooding composition, a formulation (F) having a temperature $T_F$ higher than the temperature $T_D$,
   ii) cooling the flooding composition from step i) in the mineral oil deposit and
   iii) injecting a further flooding composition through at least one injection well into the mineral oil deposit and withdrawing mineral oil through at least one production well, said formulation (F) comprising crude glycerol (CG) having the following composition: 80 to 90% by weight of glycerol, 10 to 20% by weight of water, 0 to 10% by weight of inorganic salts and 0 to 1% by weight of organic compounds, where the percentages by weight are each based on the total weight of the crude glycerol (CG).

2. The process according to claim 1, wherein the formulation (F) comprises at least 10% by weight of crude glycerol (CG), based on the total weight of the formulation (F).

3. The process according to claim 1 or 2, wherein the formulation (F) comprises 10 to 99% by weight of crude glycerol (CG), 1 to 90% by weight of water and 0 to 20% by weight of at least one inorganic salt, where the percentages by weight are each based on the total weight of the formulation (F).

4. The process according to claim 1 or 2, wherein the formulation (F) comprises at least 80% by weight, preferably at least 90% by weight and more preferably at least 99% by weight of crude glycerol (CG), where the percentages by weight are each based on the total weight of the formulation (F).

5. The process according to any of claims 1 to 4, wherein the mobility of the formulation (F) used in process step i) under deposit conditions (final mobility) is less than the mobility of the mineral oil and less than the mobility of the further flooding composition from process step iii), the mobility of the further flooding composition from process step iii) being less than or equal to the mobility of the mineral oil.

6. The process according to claim 1 or 2, wherein the deposit temperature $T_D$ is below 60°C.

7. The process according to any of claims 1 to 6, wherein the flooding composition in step ii) is cooled to a temperature not more than 10°C above the deposit temperature $T_D$.

8. The process according to any of claims 1 to 7, wherein the deposit temperature $T_D$ is in the range from 0 to 40°C, more preferably in the range from 2 to 30°C.

9. The process according to either of claims 1 to 8, wherein the formulation (F) used as the flooding composition in step i) is heated to establish the temperature $T_F$ prior to injection into the mineral oil deposit.

10. The process according to any of claims 1 to 9, wherein the formulation (F) is used as a composition for blocking highly permeable zones in the mineral oil deposit.

11. The process according to claim 10, wherein step i) or step ii) is followed by injection of a further composition into the mineral oil deposit for blocking of highly permeable regions.

12. The process according to any of claims 1 to 11, wherein the further flooding composition used in step iii) is a formulation (F) having a lower crude glycerol concentration (CG) than the formulation (F) used in step i).

13. The process according to any of claims 10 to 12, wherein the further composition used for blocking of highly permeable zones is a formulation comprising 10 to 40% by weight of crude glycerol (CG), 0.1 to 40% by weight of cellulose ether and 2 to 40% by weight of urea, where the percentages by weight are each based on the total weight of the formulation.

**Revendications**

1. Procédé d'extraction tertiaire de pétrole à partir de gisements de pétrole souterrains d'une température de gisement $T_L$, selon lequel au moins un forage d'injection et au moins un forage de production sont foncés, comprenant au moins les étapes de procédé suivantes :

    i) l'injection d'un agent d'inondation par au moins un forage d'injection dans le gisement de pétrole, une formulation (F) qui présente une température $T_F$ supérieure à la température $T_L$ étant utilisée en tant qu'agent d'inondation,
    ii) le refroidissement de l'agent d'inondation de l'étape i) dans le gisement de pétrole, et
    iii) l'injection d'un agent d'inondation supplémentaire par au moins un forage d'injection dans le gisement de pétrole et le soutirage de pétrole par au moins un forage de production,

    la formulation (F) contenant de la glycérine brute (R), qui présente la composition suivante : 80 à 90 % en poids de glycérine, 10 à 20 % en poids d'eau, 0 à 10 % en poids de sels inorganiques et 0 à 1 % en poids de composés organiques, les données de % en poids se rapportant à chaque fois au poids total de la glycérine brute (R).

2. Procédé selon la revendication 1, **caractérisé en ce que** la formulation (F) contient au moins 10 % en poids de glycérine brute (R), par rapport au poids total de la formulation (F).

3. Procédé selon la revendication 1 ou 2, **caractérisé en ce que** la formulation (F) contient 10 à 99 % en poids de glycérine brute (R), 1 à 90 % en poids d'eau et 0 à 20 % en poids d'au moins un sel inorganique, les données de % en poids se rapportant à chaque fois au poids total de la formulation (F).

4. Procédé selon la revendication 1 ou 2, **caractérisé en ce que** la formulation (F) contient au moins 80 % en poids, de préférence au moins 90 % en poids et de manière particulièrement préférée au moins 99 % en poids de glycérine brute (R), les données de % en poids se rapportant à chaque fois au poids total de la formulation (F).

5. Procédé selon l'une quelconque des revendications 1 à 4, **caractérisé en ce que** la mobilité de la formulation (F) utilisée à l'étape de procédé i) dans les conditions du gisement (mobilité finale) est inférieure à la mobilité du pétrole et inférieure à la mobilité de l'agent d'inondation supplémentaire de l'étape de procédé iii), la mobilité de l'agent d'inondation supplémentaire de l'étape de procédé iii) étant inférieure ou égale à la mobilité du pétrole.

6. Procédé selon la revendication 1 ou 2, **caractérisé en ce que** la température du gisement $T_L$ est inférieure à 60 °C.

7. Procédé selon l'une quelconque des revendications 1 à 6, **caractérisé en ce que** l'agent d'inondation est refroidi à l'étape ii) à une température qui est au plus 10 °C supérieure à la température du gisement $T_L$.

8. Procédé selon l'une quelconque des revendications 1 à 7, **caractérisé en ce que** la température du gisement $T_L$ se situe dans la plage allant de 0 à 40 °C, de manière particulièrement préférée dans la plage allant de 2 à 30 °C.

9. Procédé selon l'une quelconque des revendications 1 à 8, **caractérisé en ce que** la formulation (F) utilisée à l'étape i) en tant qu'agent d'inondation est chauffée avant l'injection dans le gisement de pétrole afin d'ajuster la température $T_F$.

10. Procédé selon l'une quelconque des revendications 1 à 9, **caractérisé en ce que** la formulation (F) est utilisée en tant qu'agent pour bloquer les zones hautement perméables dans le gisement de pétrole.

11. Procédé selon la revendication 10, **caractérisé en ce qu'**un agent supplémentaire pour bloquer les zones hautement perméables dans le gisement de pétrole est injecté après l'étape i) ou après l'étape ii).

12. Procédé selon l'une quelconque des revendications 1 à 11, **caractérisé en ce qu'**une formulation (F) qui présente une concentration en glycérine brute (R) inférieure à la formulation (F) utilisée à l'étape i) est utilisée en tant qu'agent d'inondation supplémentaire à l'étape iii).

13. Procédé selon l'une quelconque des revendications 10 à 12, **caractérisé en ce qu'**une formulation qui contient 10 à 40 % en poids de glycérine brute (R), 0,1 à 40 % en poids d'éther de cellulose et 2 à 40 % en poids d'urée est utilisée en tant qu'agent supplémentaire pour bloquer les zones hautement perméables, les données de % en poids se rapportant à chaque fois au poids total de la formulation.

$C_{Gly}$

**Figur 1**

**Figur 2**

**Figur 3**

**Figur 4**

**Figur 5**

**Figur 6**

**Figur 7**

**IN DER BESCHREIBUNG AUFGEFÜHRTE DOKUMENTE**

**In der Beschreibung aufgeführte Patentdokumente**

- SU 1654554 A1
- RU 2339803 C2

**In der Beschreibung aufgeführte Nicht-Patentliteratur**

- **BORLING et al.** Pushing out the oil with Conformance Control. *Oilfield Review,* 1994, 44 ff
- **L. K. ALTUNINA ; V. A. KUSHINOV.** *Oil & Gas Science and Technology- Rev. IFP,* 2008, vol. 63, 37-48
- **ALTUNINA L.K. ; KUVSHINOV V.A. ; STASYEVA L.A.** Opportunities in Marine Areas. *Thermoreversible Polymer Gels for Increased Efficiency of Cyclic-Steam Well Treatment, - 2006 - 1 CD-ROM, - 68th EAGE Conference & Exhibition*